# EUROPEAN PATENT APPLICATION

(11) **EP 1 544 763 A1**
(43) Date of publication of application: **22.06.2005**
(21) Application number: 03029396.3
(22) Date of filing: 19.12.2003
(51) Int. Cl.: G06F 17/60

(54) **Process management monitoring**

(71) Applicant: SAP Aktiengesellschaft, 69190 Walldorf (DE)
(72) Inventor: Scholl, Juergen, 75015 Bretten (DE); Toebben, Stephan, 69190 Walldorf (DE)
(74) Representative: Walter, Philipe

(57) **Abstract**

The inventions relates to a computer-implemented method, computer program, computer program product, computer, and data structure for providing process monitoring functionality. To allow control and monitoring of the progress of processes, it is proposed to define a process object comprising at least one task object, define for said task object at least one activity status, provide rules within said process object, said rules defining a process object status based on said at least one activities status, and execute said rules on said at least one activity status of said at least one task object to determine said process object status.

## Description

### FIELD OF THE INVENTION

The present invention relates to a computer-implemented method for providing process monitoring functionality. The invention relates in particular to product development process, which may be aided by software. The invention also relates to a computer program, and a computer program product for providing process monitoring functionality. In addition, the present invention relates to a computer for providing process monitoring functionality as well as to a data structure for providing process monitoring functionality.

### BACKGROUND

Product innovation and renovation are part of the product life cycle management. To optimise the product development process from the first prototype on bench scale up to industrial productions, trial management has to be applied.

A trial is an action for testing a product in order to achieve the required product quality/specification. During pilot plant phases, a trial allows finding product specifications for a product on a defined product line at optimal cost. More specifically, a trial is the manufacture of a product by using a recipe. A recipe may consist of formula, processing conditions, quality inspection parameters, in-process control, and equipment specification. Not all of these parameters are required. A recipe also allows the subsequent evaluation of all trial results. The trial may be carried out on a bench scale, pilot plant scale, or industrial scale.

A trial management software and trial design formulation has to provide functionality for supported recipe and process definition, scheduling, preparation, and execution. Furthermore, functionality for planning and carrying out in-process, and post-process analyses has to be provided. In order to facilitate decisions, a reporting, and evaluation functionality should be available.

A cross-area business process may comprise different tasks, and activities involving different business objects. An employee has different tasks to perform during a certain process. However, some tasks may be dependent on certain other tasks being completed by other employees.

It is therefore required that an employee is able to perform certain individual activities himself from a central working environment. Furthermore, the employee should be able to check the activities of other employees without having to become familiar with the detailed tasks involved.

In order to perform his tasks, the employee should be able to check, whether any pre-requisite tasks are already finished, or what their statuses are. In particular, when more than one sub-tasks have to be performed, their inter dependence should be defined by rules. For instance, a certain task may be started while some other tasks are still on execution, but with some finished sub-tasks. It may also be possible that a task may only be started, in case some other tasks, which are a pre-requisite for the certain task, are already finished. A detailed status of individual activities should therefore be summarised and visualized using rules.

Various different business objects, comprising activities and tasks, may be combined to define a process. This process is defined by a process flow. Within a process flow certain tasks which have to be fulfilled may be defined as pre-requisites, to achieve a certain process stage.

A business process may be designed using various business objects. To test a process, it may be defined as a trial process. Within this trial process, the different business objects may be defined with different attributes. Within a trial, the inter dependence of different business objects and a process flow may be tested. Different objects from different business unites may be used, thereby providing a cross-business trial environment.

However, for a project leader it is almost impossible to have an overview of the various tasks in progress. It is not possible to control, whether some tasks have already been performed efficiently. This lack of control may be the reason for lock-ups during product design.

### SUMMARY

To overcome these problems, the invention proposes a computer-implemented method for providing process monitoring functionality, with the steps of defining a process object comprising at least one task object, defining for said task object at least one activity status, providing rules within said process object, said rules defining a process object status based on said at least one activity status, and executing said rules on said at least one activity status of said at least one task object to determine said process object status.

By defining the process object to comprise at least one task object, and defining rules representing a process flow, the pre-requisites to achieve a certain process stage may be monitored. Furthermore, the tasks necessary to achieve a certain process status may have various activity statutes. These activity statutes may comprise information about the progress of the certain task. As some tasks depend on others, rules may be defined, which represent the interdependence of the tasks. When applying these rules, a summarised process status may be determined. This process status may be used for controlling the progress of a business process, e.g. product development.

Therefore, the inventive method allows a responsible or interested person, such as a project leader or product manager, to control the accomplishment of milestones of a project, and which milestones are still open. This monitoring tool supports the project leader to control and run, for instance, a trial process. The method allows providing a simplified view on different, and possibly complex tasks of a business process, such as a trial process. The different activities, and tasks of a trial process may be executed using a simplified interface. By providing the inventive method, a task monitor presenting a business object may be provided. Within this business object, tasks, which depend on the respective type of the objects, may be defined. The business object may be split into several tasks that have to be performed in a certain sequence. Each task has an overall status, which may be visualised by certain icons. The project leader, or any other user, may see the progress of a process, such as a trial by monitoring the status of the tasks. For each task, the project leader may see detailed status information about the related sub-tasks, which cause the overall status.

As some business objects are more complex, it is proposed that multiple task objects are linked to one process object. During product development, different tasks have to be accomplished. First of all, a trial has to be defined. Within this trial, a product recipe has to be established. In the early stages, a recipe may only comprise one task and one formula. This recipe causes a certain process order, which has to be planned, and then transferred to a pilot plant. Once a recipe and a product order is established, a stability study may have to be carried out. To have an overview of the individual tasks, the business process may therefore be split into multiple task objects, which are linked to the respective process object.

A transfer of results for factory production may be possible out of a trail. Its results may at any stage, in particular during or after pilot plant trials, be transferred into a factory for production. The results may provide all necessary information for production.

It may happen that a task requires a plurality of sub-tasks, which have to be finished in a certain order, to finish the overall task. Therefore, it is proposed that for said task object at least one sub-task object is provided. These sub-task objects may define sub-tasks, e.g. activities to be done to finish the main task.

The activity status of a task may depend on the statuses of the sub-tasks. To get an overview of the statuses of a task, it is proposed that each sub-task provides a status, and that said sub-task status determines said activity status.

To define, which sub-task statuses and activities statuses provide which overall status, it is proposed that said rules determine a dependence of activity statuses and/or statuses of sub-tasks to reach a certain process object status. A user may directly see a certain process object status. There is no need for checking the activity statuses and sub-task statuses manually, as the rules may be applied to determine the process status immediately. A user needs not to know which activity status and/or sub-task-status causes which overall status.

A task object, which may be a business object comprised of various items, may be comprised of different statuses. It is therefore proposed that a status relevant for said process object status is extracted from said task object. Not all statuses within a task object are relevant for the business process. Therefore, only the relevant statuses should be extracted.

For each task, the user may see detailed status information about the related sub-tasks, which cause the overall status. To advance a status to a next stage, or to see statuses of sub-tasks, it is proposed that said process object together with its status is selectably visualised. A double click on the task may then forward the process to the next task. A process may be shown on a work bench. In this case, each task may use a single row or column to show its status. By selecting the task, the sub-tasks may be presented.

To advance a status of tasks and/or a sub-task, it is proposed that said task and/or said sub-task is selectably visualised and that upon selection of said task and/or said sub-task the respective status is editable. Upon selection a user my edit the status, which may be advancing the status to the next stage. Also, a task and/or a sub-task may be provided with any other appropriate status. Editing the status may depend on user authorisation, which may be defined in user roles.

To provide a good overview of all pending tasks and their statuses, it is proposed that said process object status and/or said activity status and/or said sub-task status is visualised. By visualising the status, a user may directly see the progress of a process.

To allow a quick overview over a process, it is proposed that a summarised task status is determined and that said summarised task status is visualised. Determining a summarised task status may be done depending on said defined rules and the statuses of tasks and sub-tasks. The rules may define, which activity statuses and sub-task statuses result in which overall status. The result may be visualised as a summarised status. The summarised task status information may also be stored for future monitoring.

To get an in-depth knowledge about the progress of a process, a detailed task status is determined, and said detailed task status is visualised. Said detailed task status provides information about the progress of a status, e.g. the statuses of the sub-tasks.

To monitor the progress of a process easily, it is proposed that certain icons are used for visualising the statuses of the process, the tasks, and the sub-tasks.

It is also proposed that said rules define a process flow and that said status is calculated based on said rules. The various tasks within a process object may define a process flow. The succession of tasks within a process flow may then be defined by said rules. To calculate the overall status of the process object, the rules may be applied on the activity statuses. According to the rules, the process flow is reproduced and the resulting object status may be calculated.

It is also proposed that said rules define pre-requisites of sub-task statuses and/or activity statuses which have to be matched to reach a certain process object status and/or activity status, respectively. Thereby, the rules may be used to determine a process object status or activity status. The user does not have to take sub-task statuses and/or activity statuses into account to determine the process object status or activity status, respectively.

As some tasks require certain other tasks to be accomplished before being executed, it is proposed that said rules are defined to lock a task in case at least one sub-task has a pre-defined status. For example, in case a sub-task has not yet been finished, the superordinate task may not be advanced to the next stage. Then, the rules may be defined to lock this task, e.g. not allowing this task to proceed to the next stage.

On the other hand, once certain sub-tasks have certain statuses, the status of the superordinate task may be advanced to the next stage. Therefore, it is proposed that said rules are defined to make a task executable in case sub-tasks have pre-defined statuses.

To condense the amount of information and only to present relevant tasks, it is proposed that said rules are defined to make a task non-available in case said task is neither locked nor executable. Non-availability may result in non-visualisation.

Possible statuses of said activity status and/or said sub-task status may be indicated as error, warning, requirement, locked, OK, incomplete, or info. Each of this indications results in certain accessibility conditions of the tasks and sub-tasks.

A further aspect of the invention is a computer program for providing process monitoring functionality, operable to cause a processor to store a process object definition comprising at least one task object, at least one activity status defined for said task object, and rules provided within said process object, said rules defining a process object status based on said at least one activity status, and execute said rules on said at least one activity status of said at least one task object to determine said process object status.

Another aspect of the invention is a computer program product for providing process monitoring functionality, with a computer program stored thereon operable to cause a processor to store a process object definition comprising at least one task object, at least one activity status defined for said task object, and rules provided within said process object, said rules defining a process object status based on said at least one activity status, and execute said rules on said at least one activity status of said at least one task object to determine said process object status.

Yet another aspect of the invention is a computer for providing process monitoring functionality, comprising storage means to store a process object definition comprising at least one task object, at least one activity status defined for said task object, and rules provided within said process object, said rules defining a process object status based on said at least one activity status, and computing means to execute said rules on said at least one activity status of said at least one task object to determine said process object status.

Eventually, another aspect of the invention is a data structure for providing process monitoring functionality, with definitions for a process object comprising at least one task object, at least one activity status for said task object, rules within said process object, said rules defining a process object status based on said at least one activity status, whereby said definitions provide executing said rules on said at least one activity status of said at least one task object to determine said process object status.

Further advantages result of the dependent claims.

Referring now to the drawings, in which like numerals represent like elements throughout the several figures, aspects of the invention and the exemplary operating environment will be described.

### BRIEF DESCRIPTION OF THE DRAWINGS

In the drawing show:
- Fig. 1: a block diagram of a computer system;
- Fig. 2: a flowchart of an inventive method;
- Fig. 3: an inventive data structure;
- Fig. 4: a first screenshot of an inventive method;
- Fig. 5: a second screenshot of an inventive method;
- Fig. 6: a third screenshot of an inventive method.

### DETAILED DESCRIPTION

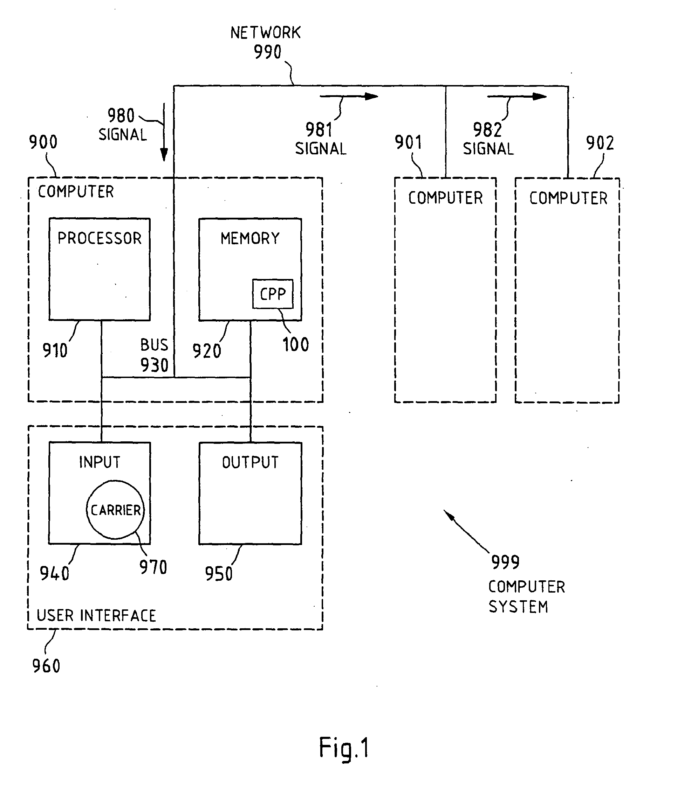

Fig. 1 illustrates a simplified block diagram of exemplary computer system 999 having a plurality of computers 900, 901, 902 (or even more).

Preferably the present invention is implemented by computers, within a computer network. An example is illustrated in connection with figure 1.

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.
Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

Process management, in particular trial management, plays a important part throughout a product development process. From the early stages of product design, and development to industrialisation, it is important to have the proper tools to prove product quality and to evaluate the production process of trials in a consistent way.

During the product development process, trials have to be carried out, and evaluated. This requires similar functions as those provided in the execution and quality management of regular manufacturing, but with a higher flexibility.

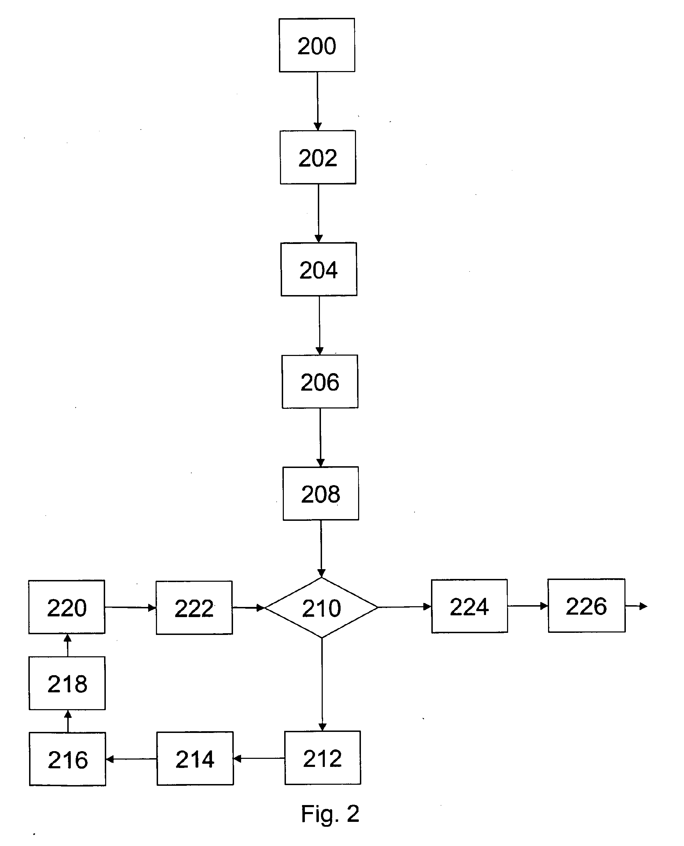

A trial business object runs through different stages, each stage defined by a certain status. These statuses may be visualised to allow a quick overview about the progress of a process. Prior to running a trial, a process object, its activities and rules, have to be defined and the process has to be initiated. As depicted in figure 2, first of all a process is defined (200). Different processes for different types of trials may be defined. Bench scale trials include mostly only steps in the laboratory. Pilot plant trials include mostly the production on the line in the production environment. But this are only two types of trials, which may be configured when the software is shipped. The customer is able to define additional trial types and link additional processes. This process definition allows defining object type, e.g. trial, object scope, e.g. bench scale trial, pilot plant trial, factory trial and various other relevant parameters for the respective trial.

After that, the various tasks, which have to be executed, have to be defined (202). These tasks comprise activities, and objects. The activities may be trial definition, planning order, transfer planning order into process order, preparation, release process order for production, execution, confirmation of results, quality management, evaluation, and other. Together with these activities, certain business objects are defined. These may be recipes, tools, material, resources, etc.

For each of these tasks, sub-tasks may also be defined (204). These sub-tasks may also comprise activities and objects. Tasks and sub-tasks have defined statuses. The status represents progress information of the respective task.

In a further step (206), rules have to be defined, which allow simulating a process flow. The process flow may be characterised by pre-requisites certain tasks and sub-tasks have to fulfil for respective statuses of the hierarchically higher ordered tasks and processes. The rules define the interdependence of the statuses of the respective tasks and sub-tasks.

After definition, the process has to be initiated (208).

After initiation, it is checked whether any tasks or sub-tasks are not finished (210).

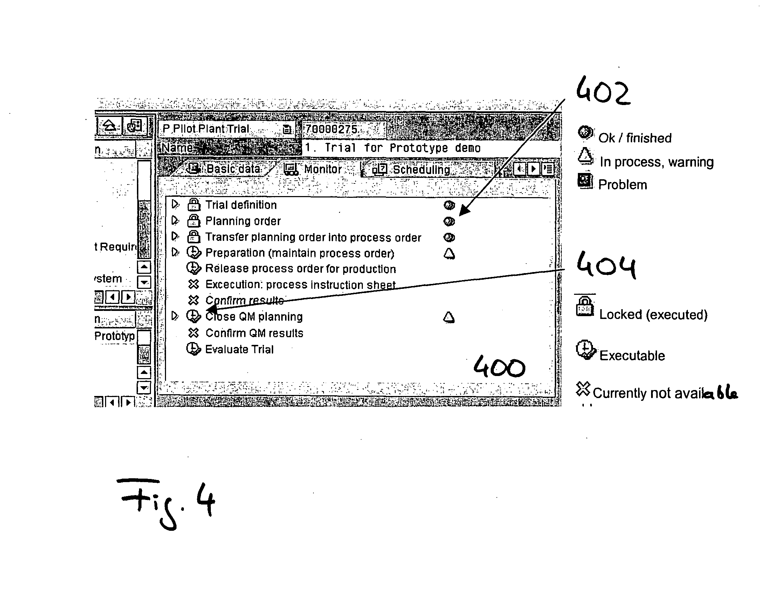

In case there are unfinished tasks, it is checked which these tasks are (212). The respective tasks and their statuses are displayed on a display device (214). The display of the tasks is shown in figures 4-6. Finished tasks may also be visualized as finished.

The project leader or any other interested user may provide reminders to the respective teams of tasks, which have not been accomplished yet (216).

While working on a task, an employee or a team may input results of tests and trials (218), and change the statuses of the respective tasks (220).

The rules are applied to the tasks and sub-tasks, and their statuses (222), and the respective status of the process or the tasks are determined. The results may again be shown on a display device.

In case no more open tasks are available, the process is finalised (224) and the process leader is informed. Also, trial results may be exported to factory planning and production planning. This may also be done at any stage.

After finalising the process (224), the results are put out (226), and may be written into a data sheet, or a data structure, which might be printed out. For further processing , the results are structured, and searchable. By that, various trials may be compared with each other.

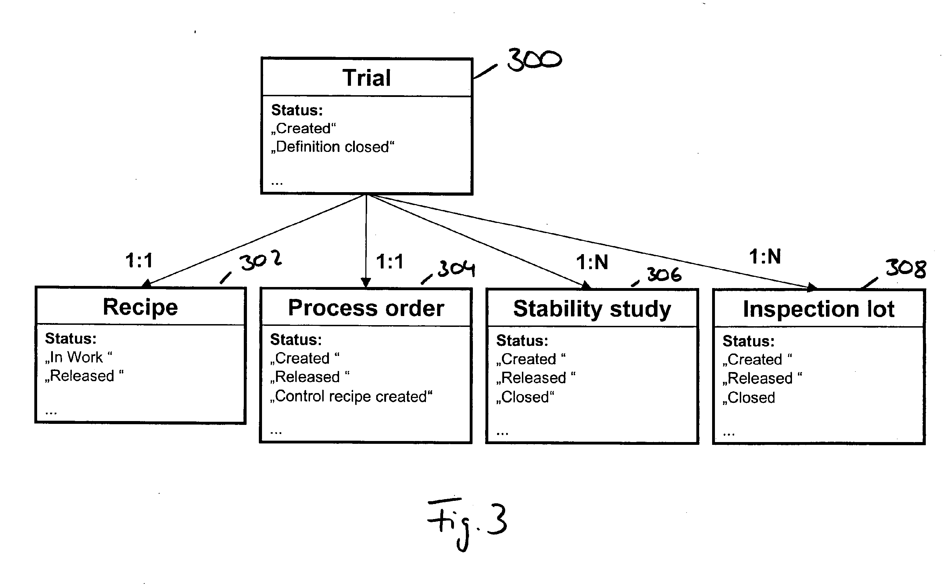

As depicted in figure 3, multiple objects 302-308 may be linked to one trial object 300. These multiple objects 302-308 may be, for example, recipe 302, process order 304, stability study, and inspection lot 308. Further objects are also possible. As depicted in figure 3, a trial business process object 300 is provided. For this trial business process object 300, one recipe object 302, and one process order 304 may be created. Moreover, a plurality of stability study objects 306 and a plurality of inspection lots 308, may be linked to this trial business process object 300. It may also be possible to create more than one process order object 304. By this, processes with multiple recipes in multiple stages might be supported within a trial.

Each of the objects 300-308 may provide different statuses. The trial business process object 300 may have the statuses 'created' and 'definition closed'. The recipe object 302 may have the status 'in work' and 'release'. The process order object 304 may have the statuses 'created', `released', 'control recipe created'. The stability study objects 306 may have the statuses 'created', 'released', 'closed'. The inspection lot objects 308 may also have the statuses 'created', 'released', 'closed'. Any other statuses are possible and may be applied, if necessary.

During execution of the process object 300, the statuses of the linked objects may change. This change may be initiated by users. This may be done by clicking an appropriate button to process a progression of a status to the next stage. The change may be initiated also by activities in the system, in background, e.g. a status change of a material by other departments may influence the object status and will be taken into account to change an object status.

A rule based process flow may be defined. This process flow allows determining the status of process object 300 based on the individual statuses of the objects 302-308. The results may be controlled by visualising the statuses of the respective objects.

Each task may have a configurable set of activity rules. These activity rules define, how a status of an object may be processed to a next stage. For instance, a task is locked if a specific sub-task status is set. After locking a task, it is not executable any longer, and may not be processed to a further stage.

In order to be executable, a task must not be locked, all requested statuses must be set, no sub-task should be indicated as error, and other pre-requisites may be necessary.

The available activities may be checked by the previously defined rules. A task may not to be available if it is neither locked nor executed.

As the rules may define a process flow, it may be defined that one task may depend on multiple statuses of multiple linked objects. Each assigned sub-task of a task may provide an individual status. It may be visualised, which sub-task has which status. By providing the rules, an overall status for a task may be determined from the statuses of the sub-tasks. These rules may define that, if one sub-task provides an error status, the summarised status shows error. If a warning is provided by a sub-task, the summarised task may show a warning. In case not all requested statuses of sub-tasks are set, the task may show incomplete. In case all sub-task are completed and do not show any warnings, the summarised task status may be indicated as OK.

Figure 4 depicts a screenshot of summarised statuses.

A monitoring window 400 shows all available tasks. These may be trial definition, planning order, transfer planning order into process order, preparation, release process order for production, execution, confirm results, close quality management planning, confirm quality management results, evaluate trial, etc. On the left hand side of the task description, task conditions 404 representing task statuses may be shown. These task conditions 404 may be depicted as icons showing different conditions. Available icons may be 'locked', 'executable' and 'currently not available'.

Moreover a task status icon 402 may be shown on the right hand side of the task description. This task status icon 402 depicts within an icon the status of a task, which may be 'OK', 'in progress', 'warning', 'problem', 'error', etc. Depending on the task statuses 402, the task conditions 404 may be calculated using the specified rules. As can be seen, for the tasks, which task status icons 402 show OK, the task conditions 404 are locked. The following tasks have a task condition 404 of executable. Tasks which follow-up later, are currently not available, as pre-conditionally the previous tasks have to be finished.

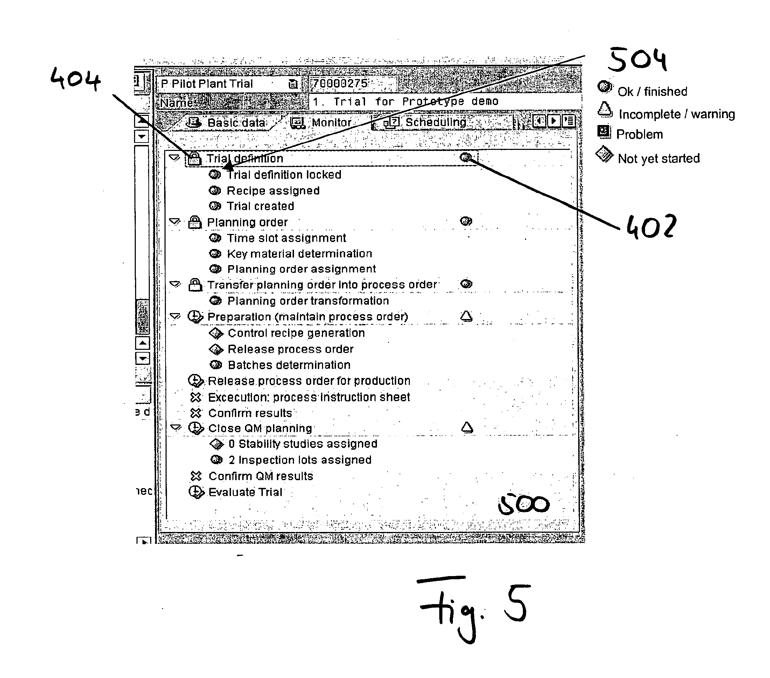

Figure 5 again depicts a more detailed view of the tasks. Upon selecting a task presented in window 400 of figure 4, the respective sub-tasks may be shown. The sub-tasks to be processed are presented in ascending order. For example, for the task 'trial definition', the sub-tasks 'trial created', 'recipe assigned', and 'trial definition locked', are defined. These sub-tasks have to be accomplished in order to complete the trial definition. To visualise the status a task status icon 504 is depicted, showing the detailed status of a sub-task.

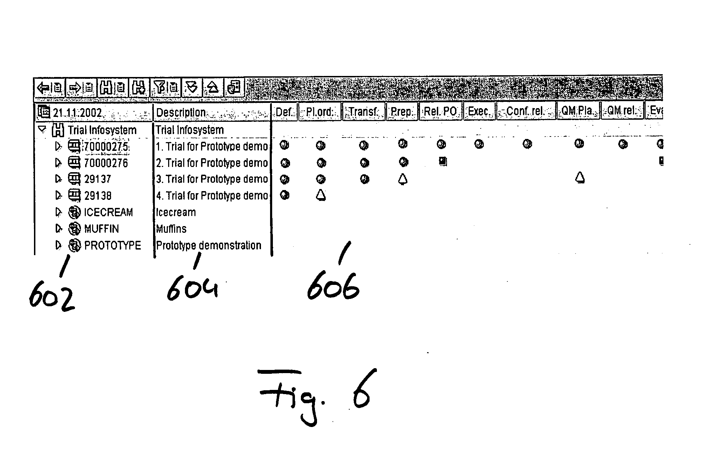

In order to provide a quick overview over various trial objects, it is proposed to present a screen as depicted in figure 6.

Depicted is a table comprising three columns 602-606. Column 602 provides information about certain trials. It may be possible to select one of these trials to get an detailed overview of the corresponding processes of this trial. This allows easy navigation. It may also be possible to have a personalised table comprising tasks and trials related to a certain user. The user may thus easily monitor his own processes.

Column 604 provides a trial description. This description describes the individual process objects.

In column 606, for each of the process objects, the summarised tasks status for the assigned tasks are depicted. For instance, for a first trial, the tasks trial definition, planning order, transfer planning, preparation, release process order, execution, confirm results, quality team management planning, quality management results, evaluation are all finished. This status is depicted in the first row by icons. For a second trial, the first four tasks are finished and the task release process order has a problem. These statuses are also depicted within the second row.

By the view depicted in figure 6, a quick overview of the progress of certain processes is possible.

The inventive method, computer, computer program, and data structure allows easy monitoring of projects. Users may control the progress of certain processes necessary for the project. Team members, and users may provide results of their tasks, and change statuses of the tasks. Depending on the statuses of tasks, and sub-tasks, the respective overall status and task conditions may be determined using pre-defined rules.

The invention allows integration of cross-area processes within a trial as well as control of trial progress.

### REFERENCE NUMBERS

- 100: computer program product
- 200: process definition
- 202: task definition
- 204: sub-task definition
- 206: rule definition
- 208: process initiation
- 210: check tasks
- 212: check open tasks
- 214: display
- 216: provide reminders
- 218: input results
- 220: change status
- 222: apply rules
- 224: finalise process
- 226: put out results
- 300: trial object
- 302: recipe object
- 304: process order object
- 306: stability study object
- 308: inspection lot object
- 400: monitoring windows
- 402: task status icon
- 404: task condition icon
- 504: status icon task
- 602: trial information column
- 604: trials description column
- 606: summarised task status column
- 900: computer
- 910: processor
- 920: memory
- 930: bus
- 940: input device
- 950: output device
- 960: user interface
- 970: program carrier
- 980: program signal
- 990: computer network
- 999: computer network system

## Claims

1. A computer-implemented method for providing process monitoring functionality, with the steps of defining a process object comprising at least one task object,
defining for said task object at least one activity status,
providing rules within said process object, said rules defining a process object status based on said at least one activity status, and
executing said rules on said at least one activity status of said at least one task object to determine said process object status.

2. The computer-implemented method of claim 1, wherein multiple task objects are linked to one process object.

3. The method of any one of claims 1 or 2, wherein for said task object at least one sub-task object is provided.

4. The computer-implemented method of any one of claims 1 to 3, wherein each sub-task provides a status, and wherein said sub-task status determines said activity status.

5. The computer-implemented method of any one of claims 1 to 4, wherein said rules determine a dependence of activity statuses and/or statuses of sub-tasks to reach a certain process object status.

6. The computer-implemented method of any one of claims 1 to 5, wherein each task object may be comprised of different statuses, and wherein a status relevant for said process object status is extracted.

7. The computer-implemented method of any one of claims 1-6, wherein said process object together with its status is selectably visualised.

8. The computer-implemented method of any one of claims 1 to 7, wherein said task and/or said sub-task is selectably visualised and wherein upon selection of said task and/or said sub-task their respective status is editable.

9. The computer-implemented method of any one of claims 1 to 8, wherein said process object status and/or said activity status and/or said sub-task status is visualised.

10. The computer-implemented method of any one of claims 1 to 9, wherein a summarised task status is determined, and wherein said summarised task status is visualised.

11. The computer-implemented method of any one of claims 1 to 10, wherein a detailed task status is determined, and wherein said detailed task status is visualised.

12. The computer-implemented method of any one of claims 1 to 11, wherein said statuses are visualised using icons.

13. The computer-implemented method of any one of claims 1 to 12, wherein said rules define a process flow, and wherein said status is calculated based on said rules.

14. The computer-implemented method of any one of claims 1 to 13, wherein said rules define pre-requisites sub-task statuses and/or activity statuses have to match to reach a certain process object states and/or activity status, respectively.

15. The computer-implemented method of any one of claims 1 to 14, wherein said rules are defined to lock a task in case at least one sub-task has a pre-defined status.

16. The computer-implemented method of any one of claims 1 to 15, wherein said rules are defined to make a task executable in case sub-tasks have pre-defined statuses.

17. The computer-implemented method of any one of claims 1 to 16, wherein said rules are defined to make a task non-available in case said task is neither locked nor executable.

18. The computer-implemented method of any one of claims 1 to 17, wherein said activity status and/or sub-task status may be indicated as error, warning, requirement, locked, OK, incomplete, or info.

19. A computer program for providing process monitoring functionality, operable to cause a processor to store a process object definition comprising at least one task object, at least one activity status defined for said task object, and rules provided within said process object, said rules defining a process object status based on said at least one activity status, and
execute said rules on said at least one activity status of said at least one task object to determine said process object status.

20. A computer program product for providing process monitoring functionality, with a computer program stored thereon operable to cause a processor to store a process object definition comprising at least one task object, at least one activity status defined for said task object, and rules provided within said process object, said rules defining a process object status based on said at least one activity status, and
execute said rules on said at least one activity status of said at least one task object to determine said process object status.

21. A computer for providing process monitoring functionality, comprising
storage means to store a process object definition comprising at least one task object, at least one activity status defined for said task object, and rules provided within said process object, said rules defining a process object status based on said at least one activity status, and
computing means to execute said rules on said at least one activity status of said at least one task object to determine said process object status.

22. A data structure for providing process monitoring functionality, with definitions for
a process object comprising at least one task object,
at least one activity status for said task object, rules within said process object, said rules defining a process object status based on said at least one activity status, whereby said definitions provide
executing said rules on said at least one activity status of said at least one task object to determine said process object status.
